# EUROPÄISCHE PATENTSCHRIFT

(11) **EP 0 598 207 B1**
(45) Veröffentlichungstag und Bekanntmachung des Hinweises auf die Patenterteilung: **04.09.1996**
(21) Anmeldenummer: 93115895.0
(22) Anmeldetag: 01.10.1993
(51) Int. Cl.: B23B 31/12

(54) **Bohrfutter**
Drill chuck
Mandrin de forage

(30) Priorität: 16.11.1992 DE 4238465
(43) Veröffentlichungstag der Anmeldung: 25.05.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- WO-A-91/12914
- DE-A- 3 602 772

## Beschreibung

Die Erfindung betrifft ein Bohrfutter, insbesondere zum Schlagbohren, mit einem an eine Bohrspindel anschließbaren Futterkörper, mit zwischen sich eine Aufnahme für einen Bohrer bildenden Futterbacken, die zum Öffnen und Schließen des Bohrfutters durch einen am Futterkörper drehbar und axial unverschiebbar geführten Stellring verstellbar sind, ferner mit einem am Futterkörper axial verschiebbar und begrenzt verdrehbar geführten Sperring, der in Umfangsrichtung mit dem Stellring durch eine lösbare Kupplung verbindbar und durch mindestens eine Kupplungsfeder im axialen Kupplungseingriff am Stellring gehalten ist, und mit einer zwischen dem Sperring und dem Futterkörper wirksamen Nachstellfeder, deren Kraft den Sperring in Bezug auf den Futterkörper in derselben Drehrichtung wie die des Stellrings beim Schließen des Bohrfutters beaufschlagt.

Bei einem aus DE 34 32 918 C2 bekannten Bohrfutter dieser Art ist im Sperring zu seiner Drehbegrenzung eine radiale Stellschraube angeordnet, die am vorderen, also radial innen liegenden Ende einen Zapfen bildet, der in eine in einem den Sperring führenden Hals des Futterkörpers vorgesehene Aussparung greift, deren Ränder in Drehrichtung des Sperrings dessen Endstellungen bestimmende Anschläge für den Zapfen bilden. Wird das Bohrfutter beim Einspannen eines Bohrers am Sperring festgehalten und letzterm gegenüber der Stellring im Sinne eines Schließens des Bohrfutters verdreht, muß das von Hand zum Festspannen des Bohrers aufgebrachte große Spanndrehmoment vollständig von dem Zapfen und von dem in der Spannrichtung den Endanschlag für den Zapfen bildenden Rand der Aussparung aufgenommen und übertragen werden. Das führt am Zapfen und an dem ihm anliegenden Aussparungsrand zu Kraftbeanspruchungen, die deswegen besonders hoch sind, weil die Anlage des Zapfens am Aussparungsrand in nur geringem radialem Abstand von der Futterachse erfolgt und außerdem keine Möglichkeit für eine Anordnung mehrerer Stellschrauben besteht, da die dann für die Zapfen in entsprechender Anzahl erforderlichen Aussparungen im Hals des Futterkörpers diesen gerade in einem Bereich, der im Bohrbetrieb besonders beansprucht ist, unzulässig schwächen würden. Diese Schwächungsgefahr verhindert sogar auch bei nur einem Zapfen größere Nachstellwinkel des Sperrings, weil sich die dann für den Zapfen benötigte Aussparung am Futterkörper über einen entsprechend großen Drehwinkel erstrecken müßte.

Der Erfindung liegt die Aufgabe zugrunde, ein Bohrfutter der eingangs genannten Art so auszubilden, daß zwischen dem Futterkörper und dem Sperring, jeweils am Ende des Drehbereichs von letzterem, auch sehr hohe Spannmomente übertragen werden können, ohne daß die die Drehbegrenzung bewirkenden Teile am Futterkörper und Sperring unzulässig belastet werden.

Diese Aufgabe wird nach der Erfindung dadurch gelöst, daß für die Drehbegrenzung des Sperrings am Futterkörper mindestens ein radial vom Futterkörper abstehender Nocken und für jeden Nocken in der Wand des Sperrings eine den Nocken aufnehmende Steuerausnehmung vorgesehen sind, wobei die Steuerausnehmung mit ihrem Rand zwei den maximal möglichen Verdrehungsweg des Sperrings bestimmende Endanschläge für den Nocken bildet.

Durch diese Anordnung wird bei dem erfindungsgemäßen Bohrfutter erreicht, daß der Nocken und die Endanschläge in einem vergleichsweisen großen radialen Abstand von der Futterachse aneinander zur Anlage kommen, was bei gleicher Drehmomentübertragung entsprechend geringere spezifische Kraftbeanspruchungen der Anlageflächen zur Folge hat. Dieser größere radiale Anschlagabstand von der Futterachse hat darüber hinaus den Vorteil, daß am Sperring eine entsprechend größere Umfangslänge für die Steuerausnehmungen zur Verfügung steht, so daß auch größere Nachstellwege an den Steuerausnehmungen unschwer verwirklicht werden können, und zwar auch dann, wenn in bevorzugter Ausführungsform der Erfindung die Nocken und die ihnen zugeordneten Steuerausnehmungen jeweils zu dritt und mit in Umfangsrichtung gleichen Abständen voneinander vorgesehen sind.

Eine besonders bevorzugte Ausführungsform der Erfindung ist dadurch gekennzeichnet, daß der Nocken an einer Ringscheibe ausgebildet ist, die vom bohrspindelseitigen Ende her axial auf den Futterkörper aufgeschoben und drehfest auf einer Ringschulter des Futterkörpers abgestützt ist, wobei der Sperring den Nocken auf der der Ringschulter axial gegenüber liegenden Seite übergreift. Diese Ringscheibe bildet ein konstruktiv und montagetechnisch überraschend günstiges und vorteilhaftes Mittel, die Nocken am Futterkörper zu verwirklichen, ohne am Futterkörper selbst Eingriffe vornehmen zu müssen, die ihn schwächen könnten. Die Drehsicherung der Ringscheibe kann sehr einfach dadurch verwirklicht werden, daß die Ringscheibe randseitig einen Vorsprung aufweist, der in Umfangsrichtung drehschlüssig in eine Aufnahme an der Ringschulter greift. Im übrigen ermöglicht die Ringscheibe auch eine sehr einfache Anordnung für die Nachstellfeder. Vorzugsweise ist dazu die Nachstellfeder als eine einenends an der Ringscheibe eingehängte Zugfeder ausgebildet, die radial nach innen am Futterkörper und axial an der Ringschulter abgestützt ist, wozu die Ringscheibe am radial innen gelegenen Rand eine sich über einen Zentriwinkel von weniger als 180° erstreckende und die Nachstellfeder aufnehmende Aussparung aufweist. Außerdem empfiehlt es sich, daß die Nocken im jeweils senkrecht zur Radialrichtung der Ringscheibe orientierten Querschnitt auf beiden Seiten abgebogene Randbereiche aufweisen, die Anschlagflächen für die Endanschläge bilden, wodurch sich niedrige Flächenpressungen an den Nocken und Endanschlägen ergeben.

Der für jede Steuerausnehmung zur Verfügung stehende größere Drehweg des Sperrings kann in weiter bevorzugter Ausführungsform sehr vorteilhaft dafür genutzt werden, daß die Steuerausnehmung an ihrem den Nocken bohrspindelseitig übergreifenden Rand zwischen den Endanschlägen eine Steuerkurve bildet, die kurz vor demjenigen Endanschlag, der die Sperringdrehung in der dem Schließen des Bohrfutters entsprechenden Drehrichtung des Stellrings beendet, einen Begrenzungsanschlag für die unter der Kraft der Nachstellfeder stattfindende Nachstellbewegung des Sperrings und zwischen diesem Begrenzungsanschlag und dem benachbarten Endanschlag einen Rastsitz für den Nocken derart aufweist, daß bei im Rastsitz befindlichem Nocken der Kupplungseingriff des Sperrings am Stellring aufgehoben ist. In diesem Zustand kann dann der Stellring unbehindert durch den Sperring in der einen oder anderen Richtung beliebig verdreht werden. Im einzelnen empfiehlt es sich, die Anordnung so zu treffen, daß der Begrenzungsanschlag von einer zum Rastsitz hin geneigt ansteigenden Flanke der Steuerkurve gebildet ist, wobei die Flankenneigung so gewählt ist, daß der Sperring zwar beim Verdrehen von Hand gegen die Kraft der Kupplungsfeder mit der Kurvenflanke über den Nocken hinweg in die Rastsitzstellung verdrehbar ist, daß dazu aber die Kraft der Nachstellfeder allein nicht ausreicht. Wird daher das Bohrfutter geöffnet, können der Sperring und der Stellring von Hand unschwer soweit gegeneinander verdreht werden, daß der Nocken in den Rastsitz gelangt und den Sperring außer Eingriff am Stellring hält.

Die Kupplung zwischen dem Sperring und dem Stellring ist zweckmäßigerweise in beiden Drehrichtungen kraftschlüssig ausgebildet und das maximal übertragbare Kupplungsdrehmoment so gewählt, daß sich durch Verdrehen von Hand die Kupplung öffnen läßt, aber die Kraft der Nachstellfeder allein dazu nicht ausreicht.

Im folgenden wird die Erfindung an einem in der Zeichnung dargestellten Ausführungsbeispiel näher erläutert; es zeigen:
- Fig. 1: einen Axialschnitt durch ein Bohrfutter nach der Erfindung,
- Fig. 2: den Schnitt II-II durch das Bohrfutter in Fig. 1,
- Fig. 3: den Schnitt III-III in Fig. 2 in einer Abwicklung in Umfangsrichtung in teils nur schematischer Darstellung und

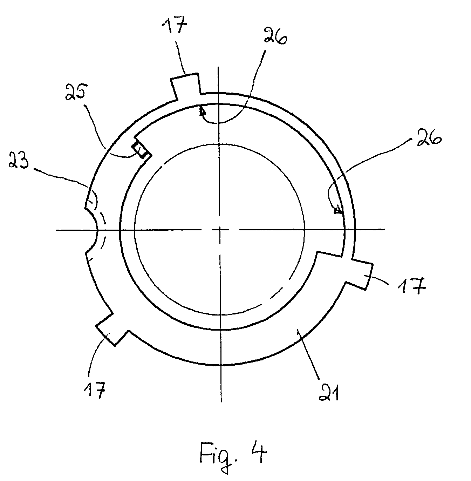

- Fig. 4: eine Draufsicht auf eine Ringscheibe des Bohrfutters nach den Fig. 1 bis 3.

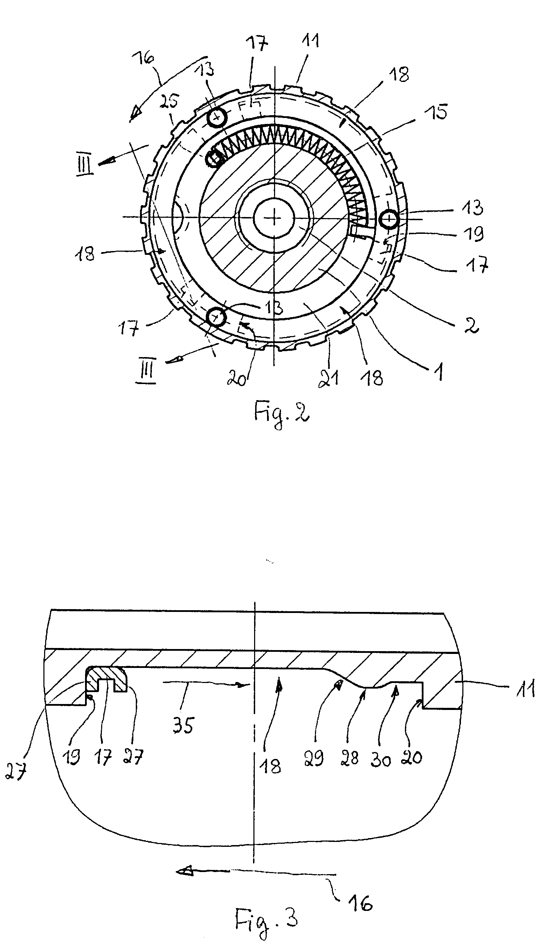

Das Bohrfutter besitzt einen Futterkörper 1 mit einer Gewindeaufnahme 2 zum Anschluß an eine nicht dargestellte Bohrspindel. In Bohrungen 3 des Futterkörpers 1 sind geneigt zur Futterachse Futterbacken 4 verschiebbar geführt, die zwischen sich eine Aufnahme für einen ebenfalls nicht dargestellten Bohrer bilden und zum Öffnen und Schließen des Bohrfutters durch einen am Futterkörper 1 drehbar und axial unverschiebbaren Stellring 5 verstellt werden können. Dazu besitzen die Futterbacken 4 eine Verzahnung 6, die in ein konisches Stellgewinde 7 am Stellring 5 eingreift. Im einzelnen ist dieser Stellring 5 mehrteilig aufgebaut und besteht aus einem Gewindering 5.1 und einer Stellhülse 5.2, die drehschlüssig und axial unverschiebbar mit dem Gewindering 5.1 verbunden ist. Der Gewindering 5.1 ist bohrspindelseitig über ein Wälzlager 8 gegen einen am Futerkörper 1 festen Lagerring 9 abgestützt. Bohrerseitig wird die Stellhülse 5.2 durch einen in eine Ringnut des Futterkörpers 1 eingesetzten Federring 10 gehalten. Weiter ist ein Sperring 11 vorgesehen, der am Futterkörper 1 axial verschiebbar und begrenzt verdrehbar geführt ist. Der Sperring 11 ist in Umfangsrichtung mit dem Stellring 5 durch eine allgemein mit 12 bezeichnete lösbare Kupplung verbindbar, und zwar durch mehrere Kupplungsfedern 13, die den Sperring 11 im axialen Kupplungseingriff am Stellring 5 halten. Diese Kupplungsfedern 13 sind über einen Haltering 14 gegen den Futterkörper 1 axial abgestützt. Der Sperring 11 kann gegen die Kraft der Kupplungsfedern 13 axial in Richtung zur Bohrspindel hin zurückgedrückt werden, wodurch sich der Kupplungseingriff am Stellring 5 löst. Zwischen dem Sperring 11 und dem Futterkörper 1 ist eine Nachstellfeder 15 vorgesehen, deren Kraft den Sperring 11 in Bezug auf den Futterkörper 1 in derselben Drehrichtung beaufschlagt wie die des Stellrings 5 beim Schließen des Bohrfutters. Diese Drehrichtung ist in den Fig. 2 und 3 jeweils durch den Pfeil 16 angedeutet. Diese Nachstellfeder 14 hat in Verbindung mit der begrenzten Verdrehbarkeit des Sperrings 11 die Aufgabe, die sichere Einspannung des Bohrerschafts zwischen den Futterbacken 4 auch dann zu gewährleisten, wenn sich die Futterbacken im Schlagbohrbetrieb in den Schaft des Bohrers eingraben sollten und sich dadurch die Einspannung des Bohrers im Bohrfutter lockern sollte. Die Drehbegrenzung des Sperrings 11 verhindert, daß die Futterbacken 4 zu tief in den Bohrerschaft eindringen und daß so dem Bohrerschaft die Möglichkeit gegeben wird, sich an den Futterbacken so weit frei zu arbeiten, daß der Bohrer relativ zu den Futterbacken geringe Axialbewegungen ausführen kann, wie sie beim Schlagbohren zweckmäßig sind. In diesem Umfang ist dann zwar die Einspannung des Bohrers zwischen den nicht mehr weiter nachstellfähigen Futterbacken gelockert, jedoch bleibt das Bohrfutter dank der dann sicheren drehschlüssigen Mitnahme zwischen dem Bohrerschaft und den Futterbacken im Zustand der Nachstellbegrenzung, so daß sich das Bohrfutter selbsttätig nicht öffnen kann und entsprechend auch die Futterbacken nicht wieder aus den von ihnen zuvor selbst geschaffenen Vertiefungen am Bohrerschaft austreten können.

Für die Drehbegrenzung des Sperrings 11 sind am Futterkörper 1 gleichmäßig über den Umfang verteilt drei radial vom Futterkörper 1 abstehende Nocken 17 vorgesehen. Für jeden Nocken 17 befindet sich in der Wand des Sperrings 11 eine den Nocken aufnehmende Steuerausnehmung 18, wobei die Steuerausnehmung 18 mit ihrem Rand zwei Endanschläge 19, 20 für den Nocken 17 bildet, die den maximal möglichen Verdrehungsweg des Sperrings 11 bestimmen. Die Nocken 17 sind an einer Ringscheibe 21 ausgebildet, die vom bohrspindelseitigen Ende her axial auf den Futterkörper 1 aufgeschoben und drehfest auf einer Ringschulter 22 des Futterkörpers 1 abgestützt ist. Der Sperring 11 übergreift den Nocken 17 auf der der Ringschulter 22 axial gegenüberliegenden Seite. Die Ringscheibe 21 ist randseitig mit einem Vorsprung 23 versehen, der in Umfangsrichtung drehschlüssig in eine Aufnahme 24 an der Ringschulter 22 greift. Die Nachstellfeder 15 ist bei 25 an der Ringscheibe 21 eingehängt und als Zugfeder ausgebildet, die radial nach innen am Futterkörper 1 und axial an der Ringschulter 22 abgestützt ist. Dazu ist die Ringscheibe 21 am radial innen gelegenen Rand mit einer Aussparung 26 versehen, die sich über die Länge der Zugfeder, aber nur über einen Zentriewinkel von weniger als 180° erstreckt, so daß die Halterung der Ringscheibe 21 am Bohrfutterkörper 1 durch diese Aussparung 26 nicht beeinträchtigt wird. Die Nocken 17 sind im jeweils senkrecht zur Radialrichtung der Ringscheibe 21 orientierten Querschnitt (Fig. 3) auf beiden Seiten mit abgebogenen Randbereichen 27 versehen, die Anschlagflächen für die Endanschläge 19, 20 am Rand der zugeordneten Steuerausnehmung 18 bilden.

Jede Steuerausnehmung 18 bildet an ihrem den Nocken 17 bohrspindelseitig übergreifenden Rand zwischen den Endanschlägen 19, 20 eine Steuerkurve 28, die kurz vor demjenigen Endanschlag 20, der die Sperringdrehung in Richtung des Pfeiles 16, also in der dem Schließen des Bohrfutters entsprechenden Drehrichtung des Stellrings 5, beendet, einen Begrenzungsanschlag 29 für die unter der Kraft der Nachstellfeder 15 stattfindende Nachstellbewegung des Sperrings 11 bildet. Weiter weist die Steuerkurve 28 zwischen diesem Begrenzungsanschlag 29 und dem ihm benachbarten Endanschlag 20 einen Rastsitz 30 für den Nocken 17 auf. Befindet sich der Nocken 17 in diesem Rastsitz 30, ist der Kupplungseingriff des Sperrings 11 am Stellring 5 aufgehoben. Im einzelnen ist der Begrenzungsanschlag 29 von einer zum Rastsitz 30 hin geneigt ansteigenden Flanke der Steuerkurve 28 gebildet. Dabei ist die Flankenneigung so gewählt, daß der Sperring 11 zwar beim Verdrehen von Hand gegen die Kraft der Kupplungsfedern 13 mit der Kurvenflanke über den Nocken 17 hinweg in die Rastsitzstellung verdreht werden kann, daß dazu aber die Kraft der Nachstellfeder 15 allein nicht ausreicht.

Die Kupplung 12 zwischen dem Sperring 11 und dem Stellring 5 ist in beiden Drehrichtungen kraftschlüssig ausgebildet. Das von der Kupplung in Umfangsrichtung maximal übertragbare Kupplungsdrehmoment ist so gewählt, daß sich durch Verdrehen von Hand der Kupplungsschluß in Umfangsrichtung lösen läßt, daß aber dazu die Kraft der Nachstellfeder 15 allein nicht ausreicht. Die Kupplung kann im einfachsten Fall 3 durch einen Reibungsschluß zwischen den aneinander liegenden Randflächen des Sperrings 11 und des Stellrings 5 gebildet sind. Die Kupplung kann aber auch besteht aus zwei einander zugeordneten und axial miteinander zum Eingriff kommenden Zahnkränzen bestehen, von welchen sich der eine am Sperring 11, der andere am Stellring 5 befindet. Die Zahnflanken der Zähne an beiden Zahnkränzen sind in beiden Drehrichtungen so ausgebildet, daß sich beim Verdrehen von Hand der Sperring 11 gegen die Kraft der Kupplungsfedern 13 über die Zahnflanken selbsttätig von Zahn zu Zahn aus dem Kupplungseingriff am Sperring 5 herausheben läßt, daß aber dazu die Kraft der Nachstellfeder 15 allein nicht ausreicht.

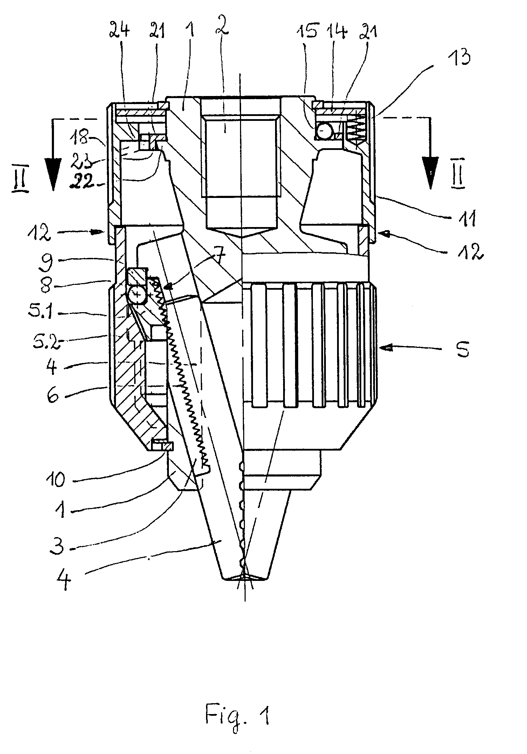

Die Funktionsweise des Bohrfutters kann kurz wie folgt beschrieben werden: Soll im Bohrfutter ein Bohrer gespannt werden, wird das Bohrfutter von Hand am Sperring 11 gehalten und der Stellring 5 im Sinne des Öffnens des Bohrfutters, also entgegengesetzt dem Fall 16, verdreht. Ist die Bohreraufnahme zwischen den Futterbacken 4 groß genug, wird der Stellring 5 in Schließrichtung des Bohrfutters, also in Richtung des Pfeiles 16, zurückgedreht, bis sich die Futterbacken 4 an den Bohrerschaft anlegen. Spätestens von diesem Augenblick an wird der Futterkörper 1 vom Stellring 5 in Drehrichtung (Pfeil 16) mitgenommen, so daß sich die Nocken 17 in derselben Drehrichtung relativ zum Sperring 11 bewegen, bis sie an den Endanschlägen 19 zur Anlage kommen und dadurch der Futterkörper 1 am weiteren Mitdrehen gehindert wird. Das Bohrfutter kann nun mit aller Kraft gespannt werden, da der Futterkörper 1 über die Nocken 17 und den Sperring 11 festgehalten wird. Gleichzeitig ist bei dieser Mitdrehung des Futterkörpers 1 durch den Stellring 5 auch die Nachstellfeder 15 gespannt worden. Diesen Betriebszustand des Bohrfutters zeigen die Fig. 1 bis 3. - Wird nun gebohrt und dringen dabei die Futterbacken 4 in den Bohrerschaft ein, erfahren sie eine Nachstellung seitens der Nachstellfeder 15, die nämlich in Bezug auf den Futterkörper 1 den Sperring 11 und über die geschlossene Kupplung 12 auch den Stellring 5 in der Schließrichtung des Bohrfutters verdreht, wobei sich die Nocken 17 in ihrer jeweiligen Steuerausnehmung 18 in in Fig. 3 eingetragenen Pfeiles 35. entlang der Steuerkurve 28 bewegen, bis sie letztlich an den Nachstellbegrenzungsanschlag 29 gelangen und bis dadurch die Nachstellbewegung beendet wird. - Soll das Bohrfutter geöffnet werden, wird bei festgehaltenem Sperring 11 der Stellring 5 entgegen dem dem Pfeil 16 ... verdreht, wobei der Futterkörper 1 zunächst mitgenommen und dabei der Nocken 17 über die geneigte Kurvenflanke des Begrenzungsanschlags 29 hinweg in den Rastsitz 30 bewegt wird, was zur Folge hat, daß sich der Sperring 11 gegen die Kraft der Kupplungsfedern 13 axial aus dem Kupplungseingriff am Stellring 5 löst. Der Sperring 11 und der Futterkörper 1 sind nun über den im Rastsitz 30 befindlichen Nocken 17 undrehbar miteinander verbunden und der Stellring 5 kann gegenüber dem Futterkörper 1 beliebig in der einen oder anderen Richtung verdreht werden. - Soll anschließend das Bohrfutter wieder geschlossen werden, wird beim Verdrehen des Stellrings 5 in Richtung des Pfeiles 16 der Futterkörper 1 zunächst wieder in Drehrichtung mitgenommen, wobei sich der Nocken 17 aus dem Rastsitz 30 des festgehaltenen Sperrings 11 löst und in die in den Fig. 2 und 3 dargestellte Lage zurückkehrt.

## Patentansprüche

1. Bohrfutter, insbes. zum Schlagbohren, mit einem an eine Bohrspindel anschließbaren Futterkörper (1), mit zwischen sich eine Aufnahme für einen Bohrer bildenden Futterbacken (4), die zum Öffnen und Schließen des Bohrfutters durch einen am Futterkörper (1) drehbar und axial unverschiebbar geführten Stellring (5) verstellbar sind, ferner mit einem am Futterkörper (1) axial verschiebbar und begrenzt verdrehbar geführten Sperring (11), der in Umfangsrichtung mit dem Stellring (5) durch eine lösbare Kupplung (12) verbindbar und durch mindestens eine Kupplungsfeder (13) im axialen Kupplungseingriff am Stellring (5) gehalten ist, und mit einer zwischen dem Sperring (11) und dem Futterkörper (1) wirksamen Nachstellfeder (15), deren Kraft den Sperring (11) in Bezug auf den Futterkörper (1) in derselben Drehrichtung wie die des Stellrings (5) beim Schließen des Bohrfutters beaufschlagt, dadurch gekennzeichnet, daß für die Drehbegrenzung des Sperrings (11) am Futterkörper (1) mindestens ein radial vom Futterkörper (1) abstehender Nocken (17) und für jeden Nocken (17) in der Wand des Sperrings (1 eine den Nocken (17) aufnehmende Steuerausnehmung (18) vorgesehen sind, wobei die Steuerausnehmung (18) mit ihrem Rand zwei den maximal möglichen Verdrehungsweg des Sperrings (11) bestimmende Endanschläge (19, 20) für den Nocken (17) bildet.

2. Bohrfutter nach Anspruch 1, dadurch gekennzeichnet, daß die Nocken (17) und die ihnen zugeordneten Steuerausnehmungen (18) jeweils zu dritt und mit in Umfangsrichtung gleichen Abständen voneinander vorgesehen sind.

3. Bohrfutter nach Anspruch 1 oder 2, dadurch gekennzeichnet, daß der Nocken (17) an einer Ringscheibe (21) ausgebildet ist, die vom bohrspindelseitigen Ende her axial auf den Futterkörper (1) aufgeschoben und drehfest auf einer Ringschulter (22) des Futterkörpers (1) abgestützt ist, wobei der Sperring (11) den Nocken (17) auf der der Ringschulter (22) axial gegenüber liegenden Seite übergreift.

4. Bohrfutter nach Anspruch 3, dadurch gekennzeichnet, daß die Ringscheibe (21) randseitig einen Vorsprung (23) aufweist, der in Umfangsrichtung drehschlüssig in eine Aufnahme (24) an der Ringschulter (22) greift.

5. Bohrfutter nach Anspruch 3 oder 4, dadurch gekennzeichnet, daß die Nachstellfeder (15) als eine einenends an der Ringscheibe (21) eingehängte Zugfeder ausgebildet ist, die radial nach innen am Futterkörper (1) und axial an der Ringschulter (22) abgestützt ist, wozu die Ringscheibe (21) am radial innen gelegenen Rand eine sich über einen Zentriwinkel von weniger als 180° erstreckende und die Nachstellfeder (15) aufnehmende Aussparung (26) aufweist.

6. Bohrfutter nach einem der Ansprüche 3 bis 5, dadurch gekennzeichnet, daß die Nocken (17) im jeweils senkrecht zur Radialrichtung der Ringscheibe (21) orientierten Querschnitt auf beiden Seiten abgebogene Randbereiche (27) aufweisen, die Anschlagflächen für die Endanschläge (19, 20) bilden.

7. Bohrfutter nach einem der Ansprüche 1 bis 6, dadurch gekennzeichnet, daß die Steuerausnehmung (18) an ihrem den Nocken (17) bohrspindelseitig übergreifenden Rand zwischen den Endanschlägen (19, 20) eine Steuerkurve (28) bildet, die kurz vor demjenigen Endanschlag (20), der die Sperringdrehung in der dem Schließen des Bohrfutters entsprechenden Drehrichtung des Stellrings (5) beendet, einen Begrenzungsanschlag (29) für die unter der Kraft der Nachstellfeder (15) stattfindende Nachstellbewegung des Sperrings (11) und zwischen diesem Begrenzungsanschlag (29) und dem benachbarten Endanschlag (20) einen Rastsitz (30) für den Nocken (17) derart aufweist, daß bei im Rastsitz (30) befindlichem Nocken (17) der Kupplungseingriff des Sperrings (11) am Stellring (5) aufgehoben ist.

8. Bohrfutter nach Anspruch 7, dadurch gekennzeichnet, daß der Begrenzungsanschlag (29) von einer zum Rastsitz (30) hin geneigt ansteigenden Flanke der Steuerkurve (28) gebildet ist, wobei die Flankenneigung so gewählt ist, daß der Sperring (11) zwar beim Verdrehen von Hand gegen die Kraft der Kupplungsfeder (13) mit der Kurvenflanke über den Nocken (17) hinweg in die Rastsitzstellung verdrehbar ist, daß dazu aber die Kraft der Nachstellfeder (15) allein nicht ausreicht.

9. Bohrfutter nach einem der Ansprüche 1 bis 8, dadurch gekennzeichnet, daß die Kupplung (12) zwischen dem Sperring (11) und dem Stellring (5) in beiden Drehrichtungen kraftschlüssig ausgebildet und das maximal übertragbare Kupplungsdrehmoment so gewählt ist, daß sich durch Verdrehen von Hand die Kupplung (12) öffnen läßt, aber die Kraft der Nachstellfeder (15) allein dazu nicht ausreicht.

10. Bohrfutter nach Anspruch 9, dadurch gekennzeichnte, daß die Kupplung (12) aus zwei einander zugeordneten und axial miteinander zum Eingriff kommenden Zahnkränzen gebildet ist, wobei die Zahnflanken in beiden Drehrichtungen des Sperr- bzw. Stellrings so ausgebildet sind, daß sich beim Verdrehen von Hand der Sperring (11) gegen die Kraft der Kupplungsfeder (15) über die Zahnflanken selbsttätig von Zahn zu Zahn aus dem Kupplungseingriff herausheben läßt, daß aber dazu die Kraft der Nachstellfeder (15) allein nicht ausreicht.

## Claims

1. A drilling chuck, in particular for hammer drilling, comprising a chuck body (1) which can be connected to a drilling spindle, chuck jaws (4) which form between them a receiving means for a drill and which for opening and closing the drilling chuck are displaceable by an adjusting ring (5) which is guided rotatably and axially immovably on the chuck body (1), further comprising a locking ring (11) which is axially displaceably and limitedly rotatably guided on the chuck body (1) and which can be connected to the adjusting ring (5) in the peripheral direction by a releasable coupling (12) and which is held in dial coupling engagement on the adjusting ring (5) by at least one coupling spring (13), and a take-up adjusting spring (15) which is operative between the locking ring (11) and the chuck body (1) and whose force acts on the locking ring (11) in relation to the chuck body (1) in the same direction of rotation as that of the adjusting ring (5) when closing the drilling chuck, characterised in that for limiting the rotary movement of the locking ring (11) on the chuck body (1) there are provided at least one projection (17) which projects radially from the chuck body (1) and for each projection (17) in the wall of the locking ring (1) a control opening (18) for receiving the projection (17), wherein the control opening (18) forms with its edge two limit stops (19, 20) for the projection (17), which stops determine the maximum possible rotational travel of the locking ring (11).

2. A drilling chuck according to claim 1 characterised in that the projections (17) and the control openings (18) associated therewith are respectively provided in threes and at spacings from each other which are the same in the peripheral direction.

3. A drilling chuck according to claim 1 or claim 2 characterized in that the projection (17) is provided on an annular disc (21) which is pushed axially on to the chuck body (1) from the drilling spindle end and which is non-rotatably supported on an annular shoulder (22) of the chuck body (1), wherein the locking ring (11) engages over the projection (17) on the side which is axially opposite to the annular shoulder (22).

4. A drilling chuck according to claim 3 characterized in that at its edge the annular disc (21) has a projection portion (23) which engages non-rotatably in the peripheral direction into a receiving means (24) on the annular shoulder (22).

5. A drilling chuck according to claim 3 or claim 4 characterized in that the take-up adjusting spring (15) is in the form of a tension spring which is connected at one end to the annular disc (21) and which is supported radially inwardly on the chuck body (1) and axially on the annular shoulder (22), for which purpose the annular disc (21), at the radially inward edge, has a recess (26) which extends over an angle at the centre of less than 180° and which accommodates the take-up adjusting spring (15).

6. A drilling chuck according to one of claims 3 to 5 characterised in that the projections (17) have edge regions (27) which are bent over at both sides in the cross-section which is respectively oriented perpendicularly to the radial direction of the annular disc (21), which edge regions form stop surfaces for the limit stops (19, 20).

7. A drilling chuck according to one of claims 1 to 6 characterised in that the control opening (18), at its edge which engages over the projection (17) at the drilling spindle side, between the limit stops (19, 20), forms a control cam (28) which, just before that limit stop (20) which terminates the rotary movement of the locking ring in the direction of rotation of the adjusting ring (5) corresponding to closure of the drilling chuck, has a limiting abutment (29) for the take-up adjusting movement of the locking ring (11), which occurs under the force of the take-up adjusting spring (15), and between said limiting abutment (29) and the adjacent limit stop (20) a retaining seat (30) for the projection (17) in such a way that when the projection (17) is in the retaining seat (30) the coupling engagement of the locking ring (11) on the adjusting ring (5) is released.

8. A drilling chuck according to claim 7 characterised in that the limiting abutment (29) is formed by a side of the control cam (28) which rises inclinedly towards the retaining seat (30), wherein the inclination of the side of the control cam is so selected that although the locking ring (11) is rotatable upon being rotated by hand against the force of the coupling spring (13) with the side of the cam beyond the projection (17) into the retaining seat position, the force of the take-up adjusting spring (15) however is on its own not sufficient for that purpose.

9. A drilling chuck according to one of claims 1 to 8 characterised in that the coupling (12) between the locking ring (11) and the adjusting ring (15) is of a force-locking configuration in both directions of rotation and the maximum coupling torque which can be transmitted is so selected that the coupling (12) can be opened by rotation by hand but the force of the take-up adjusting spring (15) is not sufficient on its own for that purpose.

10. A drilling chuck according to claim 9 characterised in that the coupling (12) comprises two toothed rings which are associated with each other and which come axially into engagement with each other, wherein the tooth flanks in both directions of rotation of the locking and adjusting ring respectively are of such a configuration that upon rotation by hand the locking ring (11) can be automatically lifted out of the condition of coupling engagement from one tooth to another against the force of the coupling spring (15) by way of the tooth flanks, but the force of the take-up adjusting spring (15) is not sufficient on its own for that purpose.

## Revendications

1. Mandrin de perceuse, notamment pour le perçage à percussion, comprenant un corps de mandrin (1) pouvant être raccordé à une broche de perçage, des mors (4) formant un logement pour un foret et qui sont déplaçables pour l'ouverture et la fermeture du mandrin de perceuse au moyen d'une bague de réglage (5) guidée sur le corps (1) du mandrin de manière à pouvoir tourner, sans possibilité de déplacement axial, et comportant en outre une bague de blocage (11) guidée sur le corps (1) du mandrin de manière à être déplaçable axialement et à avoir une rotation limitée et qui peut être reliée, dans la direction circonférentielle, à la bague de réglage (5) au moyen d'un accouplement amovible (12) et est retenue selon un engrènement d'accouplement axial sur la bague de réglage (5) par au moins un ressort d'accouplement (13), et un ressort de réglage (15) qui agit entre la bague de blocage (11) et le corps (1) du mandrin et dont la force charge la bague de blocage (11) dans le même sens de rotation, par rapport au corps (1) du mandrin, que celui de la bague de réglage (5) lors de la fermeture du mandrin de perceuse, caractérisé en ce que pour la limitation en rotation de la bague de blocage (11) il est prévu sur le corps (1) du mandrin au moins un appendice saillant (17) qui fait saillie radialement par rapport au corps (1) du mandrin et pour chaque appendice saillant (17) il est prévu, dans la paroi de la bague de blocage (11), un évidement de commande (18) logeant l'appendice saillant (17), l'évidement de commande (18) formant, par son bord, deux butées d'extrémité (19,20) pour l'appendice saillant (17), qui déterminent la course maximale possible de rotation de la bague de blocage (11).

2. Mandrin de perceuse selon la revendication 1, caractérisé en ce que les appendices saillants (17) et les évidements de commande (18), qui leurs sont associés, sont prévus respectivement de façon triple et sont séparés par des distances réciproques identiques dans la direction circonférentielle.

3. Mandrin de perceuse selon la revendication 1 ou 2, caractérisé en ce que l'appendice saillant (17) est formé sur un disque annulaire (21), qui est emmanché axialement sur le corps (1) du mandrin à partir de l'extrémité située du côté de la broche de perçage et est supporté avec blocage en rotation sur un épaulement annulaire (22) du corps (1) du mandrin, la bague de blocage (11) s'engageant par-dessus l'appendice saillant (17), sur le côté situé axialement à l'opposé de l'épaulement annulaire (22).

4. Mandrin de perceuse selon la revendication 3, caractérisé en ce que le disque annulaire (21) comporte, sur son bord, un appendice saillant (23), qui s'engage selon une liaison d'entraînement en rotation dans la direction circonférentielle, dans un logement (24) aménagé dans l'épaulement annulaire (22).

5. Mandrin de perceuse selon la revendication 3 ou 4, caractérisé en ce que le ressort de réglage (15) est agencé sous la forme d'un ressort de traction, qui est accroché par une extrémité au disque annulaire (21) et qui est supporté radialement, sur le côté intérieur, sur le corps (1) du mandrin et axialement sur l'épaulement annulaire (22), le disque annulaire (21) comportant à cet effet, sur son bord tourné radialement vers l'intérieur, une découpe (26) qui s'étend sur un angle au centre inférieur à 180° et loge le ressort de réglage (15).

6. Mandrin de perceuse selon l'une des revendications 3 à 5, caractérisé en ce que les appendices (17) possèdent, dans la section transversale s'étendant respectivement perpendiculairement à la direction radiale du disque annulaire (21) des parties marginales (27) repliées des deux côtés et qui forment des surfaces de butée pour les butées d'extrémité (19,20).

7. Mandrin de perceuse selon l'une des revendications 1à 6, caractérisé en ce que l'évidement de commande (18) forme, sur son bord qui s'engage au-dessus de l'appendice saillant (17) du côté de la broche de perçage, entre les butées d'extrémité (19,20), une came de commande (28), qui possède, légèrement en avant de la butée d'extrémité (20), qui arrête la rotation de la bague de blocage dans le sens de rotation de la bague de réglage (5) qui correspond à la fermeture du mandrin de perceuse, une butée de limitation (29) pour le déplacement de réglage de la bague de blocage (11), qui s'effectue sous l'action de la force du ressort de réglage (15), et possède un cran d'encliquetage (30) pour l'appendice saillant (17) entre cette butée de limitation (29) et la butée d'extrémité voisine (20), de telle sorte que, lorsque l'appendice saillant (17) est situé dans le cran d'encliquetage (30), l'engrènement d'accouplement de la bague de blocage (11) avec la bague de réglage (5) est supprimé.

8. Mandrin de perceuse selon la revendication 7, caractérisé en ce que la butée de limitation (29) est formée par un flanc de la came de commande (28), qui remonte en position inclinée par rapport au cran d'encliquetage (30), l'inclinaison de ce flanc étant choisie de telle sorte que, lorsqu'on exécute une rotation manuelle à l'encontre de la force du ressort d'accouplement (13), la bague de blocage (11) peut tourner en venant dans la position du cran d'encliquetage, le flanc de la came passant par-dessus un doigt (17), mais que la force du ressort de réglage (15) seul n'est pas suffisante à cet effet.

9. Mandrin de perceuse selon l'une des revendications 1 à 8, caractérisé en ce que l'accouplement (12) entre la bague de blocage (11) et la bague de réglage (5) est agencé de manière à permettre une transmission de force dans les deux sens de rotation et que le couple maximum transmissible d'accouplement est choisi de telle sorte qu'on peut ouvrir l'accouplement (12) en exécutant une rotation manuelle, mais que la force du ressort de réglage (15) n'est pas suffisante à cet effet.

10. Mandrin de perceuse selon la revendication 9, caractérisé en ce que l'accouplement (12) est formé par des couronnes dentées qui sont associées et engrènent axialement entre elles, les flancs des dents dans les deux sens de rotation de la bague de blocage ou de la bague de réglage étant agencés de telle sorte que, lorsqu'on exécute une rotation manuelle, la bague de blocage (11) peut se dégager automatiquement d'une dent à l'autre de l'engagement d'accouplement en passant par-dessus les flancs des dents, à l'encontre de la force du ressort d'accouplement (13), mais qu'à cet effet la force du ressort de réglage (15) seul n'est pas suffisante.
